Europäisches Patentamt

European Patent Office

Office européen des brevets

(19)

(11) Veröffentlichungsnummer: **0 143 304**
A2

# (12) EUROPÄISCHE PATENTANMELDUNG

(21) Anmeldenummer: **84112436.5**

(22) Anmeldetag: **16.10.84**

(51) Int. Cl.⁴: **C 08 G 18/42,** C 08 G 18/40, C 08 G 18/66

(30) Priorität: **28.10.83 DE 3339235**

(43) Veröffentlichungstag der Anmeldung: **05.06.85**
**Patentblatt 85/23**

(84) Benannte Vertragsstaaten: **AT BE CH DE FR GB IT LI NL SE**

(71) Anmelder: **BAYER AG, Konzernverwaltung RP Patentabteilung, D-5090 Leverkusen 1 Bayerwerk (DE)**

(72) Erfinder: **Kubens, Rolf, Dr., Carl-Leverkus-Strasse 1, D-5068 Odenthal (DE)**
Erfinder: **Prater, Klaus, Dr., Bodelschwinghstrasse 22, D-4150 Krefeld (DE)**

(54) **Verfahren zur Herstellung von Polyurethanen.**

(57) Ein neues Verfahren zur Herstellung von Polyurethanen durch Umsetzung von organischen Polyisocyanaten mit Polyesterpolyolen, gegebenenfalls in Gegenwart der in der Polyurethanchemie üblichen Hilfs- und Zusatzmittel, wobei man als Polyesterpolyole Estergruppen aufweisende Umsetzungsprodukte des Hydroxylzahlbereichs von 150 bis 710, des Säurezahlbereichs von 0 bis 20 und des Viskositätsbereichs bei 25 °C von 100 bis 6000 mPa.s von Phthalsäure und/oder Phthalsäureanhydrid mit gegebenenfalls Ethergruppen aufweisenden Alkandiolen oder Alkandiolgemischen des Hydroxylzahlbereichs von 400 bis 1810 verwendet.

EP 0 143 304 A2

BAYER AKTIENGESELLSCHAFT     5090 Leverkusen, Bayerwerk

Konzernverwaltung RP
Patentabteilung     Wr/by-c

Verfahren zur Herstellung von Polyurethanen

Die vorliegende Erfindung betrifft ein neues Verfahren zur Herstellung von Polyurethanen, bei welchem man organische Polyisocyanate mit bestimmten, nachstehend näher beschriebenen, niedermolekularen Polyesterdiolen auf Basis der Phthalsäure zur Reaktion bringt.

Die Verwendung von Polyesterpolyolen als Ausgangsmaterialien bei der Herstellung von Polyurethankunststoffen ist seit langen Jahren bekannt (vgl. Kunststoff-Handbuch, Band 7, Polyurethane", (1966), Seiten 46 ff., Carl-Hanser-Verlag München). In der Praxis spielen praktisch ausschließlich Polyesterpolyole aus Adipinsäure (Schaumstoffe und Elastomere), sowie verzweigte, hochviskose bis feste Polyesterpolyole aus Phthalsäure (Lacke und Oberflächenbeschichtungen) eine Rolle. Die Polyesterpolyole des Standes der Technik insbesondere die genannten Polyesterpolyole aus Phthalsäure weisen neben dem Nachteil ihrer hohen Viskosität auch den Nachteil einer schlechten Verträglichkeit mit Polyetherpolyolen auf, so daß Gemische dieser Polyester-

Le A 22 686 - Ausland

- 2 -

0143304

polyole mit den Polyetherpolyolen der technischen Polyurethanchemie keinen Eingang in die großtechnische Praxis
finden konnten.

Wie jetzt überraschend gefunden wurde stellen die nachstehend näher beschriebenen, vergleichsweise niedermolekularen, unverzweigten Polyesterdiole aus Phthalsäure
bzw. Phthalsäureanhydrid interessante Ausgangskomponenten für die Herstellung von Polyurethankunststoffen
dar, die nicht mit den genannten Nachteilen der klassischen
Polyesterpolyole des Standes der Technik behaftet sind.
Die erfindungswesentlichen Polyesterdiole weisen eine
vergleichsweise niedrige Viskosität auf, sie sind mit
den üblichen Polyetherpolyolen gut verträglich, und
sie sind für die Herstellung von Polyurethankunststoffen
der unterschiedlichsten Art hervorragend geeignet. So
weisen die nach dem erfindungsgemäßen Verfahren hergestellten Polyurethane sowohl in kompakter als auch in
geschäumter Form mechanische Eigenschaften auf, die
den entsprechenden Produkten des Standes der Technik
zumindest ebenbürtig oft jedoch überlegen sind. Dies
ist insbesondere im Falle der harten Polyurethanschaumstoffe überraschend, da man bislang der Ansicht war,
daß zur Herstellung von hochwertigen Hartschaumstoffen verzweigte Polyole eingesetzt werden müssen.

Gegenstand der Erfindung ist somit ein Verfahren zur
Herstellung von Polyurethanen durch Umsetzung von organischen Polyisocyanaten mit Polyesterpolyolen, ge-

Le A 22 686

gebenenfalls in Gegenwart der in der Polyurethanchemie üblichen Hilfs- und Zusatzmittel, dadurch gekennzeichnet, daß man als Polyesterpolyole Estergruppen aufweisende Umsetzungsprodukte des Hydroxylzahlbereichs von 150 bis 710 des Säurezahlbereichs von 0 bis 20 und des Viskositätsbereichs bei 25°C von 100 bis 6000 mPa.s von Phthalsäure und/oder Phthalsäureanhydrid mit gegebenenfalls Ethergruppen aufweisenden Alkandiolen oder Alkandiolgemischen des Hydroxylzahlbereichs von 400 bis 1810 verwendet.

Für das erfindungsgemäße Verfahren geeignete Polyisocyanate sind die üblichen Polyisocyanate des Standes der Technik wie beispielsweise 2,4-Diisocyanatotoluol bzw. dessen technische Gemische mit bis zu 35 Gew.-%, bezogen auf Gesamtgemisch, an 2,6-Diisocyanatotoluol, 4,4'-Diisocyanatodiphenylmethan, dessen technischen Gemische mit 2,4'- und gegebenenfalls 2,2'-Diisocyanatodiphenylmethan, Phosgenierungsprodukte von Anilin/Formaldehyd-Kondensaten, die neben den genannten Diisocyanato-diphenylmethan-Isomeren höhere Homologe in unterschiedlichsten Mengen enthalten können, Hexamethylendiisocyanat, 1-Isocyanato-3,3,5-trimethyl-5-isocyanatomethyl-cyclohexan (Isophorondiisocyanat, abgekürzt: IPDI), oder Urethan-, Carbodiimid-, Isocyanurat-, Allophanat- oder Biuret-modifizierte Polyisocyanate auf Basis der genannten einfachen Polyisocyanate, oder beliebige Gemische derartiger Polyisocyanate. Vorzugsweise werden beim erfindungsgemäßen Verfahren flüssige, gegebenenfalls modifizierte Polyisocyanate der genannten Art mit aromatisch gebundenen Isocyanat-

Le A 22 686

gruppen eingesetzt. Besonders bevorzugt werden die genannten Phosgenierungsprodukte von Anilin-Formaldehyd-Kondensaten verwendet.

Bei den erfindungswesentlichen Polyesterpolyolen handelt es sich um endständige Hydroxylgruppen aufweisende Umsetzungsprodukte des Hydroxylzahlbereichs 150 bis 710, vorzugsweise 180 bis 600, des Säurezahlbereichs von 0 bis 20, vorzugsweise 0 bis 10 und des Viskositätsbereichs bei 25°C von 100 bis 6000, vorzugsweise 300 bis 4000 mPa.s von Phthalsäure und/oder Phthalsäureanhydrid mit gegebenenfalls Ethergruppen aufweisenden Alkandiolen oder Alkandiolgemischen des Hydroxylzahlbereichs 400 bis 1810, vorzugsweise 600 bis 1810. Bei der Herstellung der erfindungswesentlichen Polyesterpolyole aus den genannten Ausgangsmaterialien werden die Alkandiole oftmals im Überschuß, d.h. beispielsweise in, einem Molverhältnis von Hydroxylgruppen zu Säureanhydridgruppen von bis zu 6:1 oder einem Molverhältnis von Hydroxylgruppen zu Carboxylgruppen von bis zu 3:1 entsprechenden, Mengen eingesetzt, so daß Gemische aus Polyesterpolyol im wörtlichen Sinn des Worts und überschüssigem Alkandiol entstehen. Der Begriff "Polyesterpolyol" soll im Rahmen der Erfindung auch derartige, bei der Veresterungsreaktion direkt anfallende Gemische umfassen.

Geeignete Reaktionspartner für die Phthalsäure bzw. das Phthalsäureanhydrid sind beispielsweise Ethylenglykol, Di-, Tri-, oder Tetraethylenglykol, Propylenglykol, Di-, Tri- oder Tetrapropylenglykol, die verschiedenen isomeren Butandiole, insbesondere 1,4-Di-

Le A 22 686

hydroxy-butan, die verschiedenen isomeren Hexandiole, insbesondere 1,6-Dihydroxyhexan oder beliebige Gemische derartiger Diole. Vorzugsweise werden technische Ethylen- und/oder Polyethylenglykole der genannten Art eingesetzt, die oftmals Homologengemische darstellen. Die Mitverwendung von geringen Mengen an höher als difunktionellen Alkoholen wie z.B. Glycerin oder Trimethylolpropan bei der Herstellung der Polyesterpolyole, beispielsweise in Mengen von bis zu 5 Hydroxyl-Äquivalentprozent, bezogen auf alle im Polyolgemisch vorliegende Hydroxylgruppen, ist nicht völlig ausgeschlossen, jedoch keineswegs bevorzugt.

Bei der Durchführung des erfindungsgemäßen Verfahrens können die aus der Polyurethanchemie an sich bekannten Hilfs- und Zusatzmittel mitverwendet werden.

So können bei der Durchführung des erfindungsgemäßen Verfahrens bis zu 80, vorzugsweise bis zu 60 und insbesondere bis zu 30 Hydroxyl-Äquivalentprozent, bezogen auf die Gesamtmenge der Verbindungen mit alkoholischen Hydroxylgruppen, an den aus der Polyurethanchemie bekannten, gegebenenfalls Ester- oder Ethergruppen aufweisenden mehrwertigen Alkoholen des Molekulargewichtsbereichs 62 bis 6000, vorzugsweise 62 bis 3000 eingesetzt werden. Die genannten maximal 80, vorzugsweise maximal 60 und insbesondere maximal 30 Hydroxyl-Äquivalentprozente an anderen Polyhydroxylverbindungen umfassen sowohl die bei der Herstellung der erfindungswesentlichen Polyesterpolyole im Überschuß eingesetzten, gegebenenfalls Ethergruppen aufweisenden Alkandiole als auch Polyole, die den erfindungswesentlichen Polyesterpolyolen nach deren Herstellung zugesetzt worden sind.

Beispiele derartiger Zusatzstoffe sind niedermolekulare mehrwertige Alkohole der oben bereits beispielhaft genannten Art (an Stelle

**Le A 22 686**

der zusätzlichen Mitverwendung derartiger Polyole, d.h.
Diole, können auch unter Verwendung eines entsprechend
höheren Diolüberschusses hergestellte Phthalsäureesterdiole eingesetzt werden), Glycerin, Trimethylolpropan,
Rizinusöl, Polyesterpolyole auf Basis von Adipinsäure
und einfachen Polyolen der bereits genannten Art des
Molekulargewichtsbereichs 400 bis 6000, vorzugsweise
800 bis 3000, Polyetherpolyole eines unter 6000, vorzugsweise unter 3000 liegenden Molekulargewichts, die
mit den oben beispielhaft genannten Ethergruppen aufweisenden Diolen nicht identisch sind oder um beliebige
Gemische derartiger, Hydroxylgruppen aufweisender Verbindungen. Bevorzugte derartige Zusatzmittel sind die
zuletzt genannten Polyetherpolyole.

Grundsätzlich denkbar jedoch keineswegs bevorzugt ist auch
die Mitverwendung von anderen Verbindungen mit gegenüber
Isocyanatgruppen reaktionsfähigen Gruppen wie beispielsweise aliphatischen oder aromatischen Polyaminen. Derartige Zusatzstoffe werden allenfalls in einer Menge
von bis zu 20 Äquivalentprozent, bezogen auf alle im
Reaktionsgemisch vorliegende, gegenüber Isocyanatgruppen
reaktionsfähige Gruppen, mitverwendet.

Weitere geeignete gegebenenfalls mitzuverwendende Hilfs-
und Zusatzmittel sind beispielsweise mineralische Füllstoffe, aus der Polyurethanlack- oder -klebstofftechnologie bekannte inerte Lösungsmittel, Pigmente,
Schaumstabilisatoren beispielsweise auf Polysiloxanbasis, Wasser absorbierende Substanzen, aus der Poly-

Le A 22 686

urethanchemie bekannte Katalysatoren, d.h. insbesondere tert. Amine wie z.B. Triethylendiamin oder Dimethylanilin bzw. metallorganische Verbindungen wie z.B. Zinn (II)-octoat oder Dibutylzinn-dilaurat. Auch die aus der Polyurethanchemie an sich bekannten Treibmittel wie z.B. halogenierte Kohlenwasserstoffe oder Wasser können beim erfindungsgemäßen Verfahren mitverwendet werden.

Bei der Durchführung des erfindungsgemäßen Verfahrens kommen die Reaktionspartner in solchen Mengenverhältnissen zum Einsatz, die einem Äquivalentverhältnis von Isocyanatgruppen zu gegenüber Isocyanatgruppen reaktionsfähigen Gruppen von 0,5:1 bis 2:1, vorzugsweise 0,7:1 bis 1,5:1 entsprechen. Besonders bevorzugt werden äquivalente bzw. nahezu äquivalente Menge (Äquivalentverhältnis von Isocyanatgruppen zu gegenüber Isocyanatgruppen reaktionsfähigen Gruppen von 0.8:1 bis 1,1:1 der Ausgangsmaterialien miteinander zur Reaktion gebracht.

Das erfindungsgemäße Verfahren wird im allgemeinen innerhalb des Temperaturbereichs von 0 bis 150°C, vorzugsweise von 15 bis 100°C durchgeführt.

Zur Durchmischung der Reaktionspartner kann man sich aller, in der technischen Polyurethanchemie üblichen Methoden bedienen. Dies bedeutet beispielsweise, daß die Reaktionspartner durch einfaches Verrühren oder auch unter Verwendung der üblichen Mischaggregate miteinander vermischt werden können.

Das erfindungsgemäße Verfahren eignet sich zur Herstellung von Polyurethanschaumstoffen, von Vergußmassen, Elektroisoliermaterialien, Lacken und Beschichtungen,

Le A 22 686

Verklebungen, elastomeren Werkstoffen oder von Kunststoff-Formteilen. Darüber hinaus eignet sich das erfindungsgemäße Verfahren zur Abdichtung und/oder Verfestigung von geologischen Formationen beispielsweise im Steinkohlenbergbau.

In den nachfolgenden Beispielen beziehen sich alle Prozentangaben auf Gewichtsprozente.

In den nachfolgenden Beispielen werden folgende Ausgangsmaterialien eingesetzt:

Polyesterpolyol I, hergestellt durch Umsetzung von Phthalsäureanhydrid und Ethylenglykol im Molverhältnis 1:2,3 mit einer OH-Zahl von 540, einer Säurezahl von 1,5 und einer Viskosität von 3760 mPa.s bei 25°C.

Polyesterpolyol II, hergestellt durch Umsetzen von Phthalsäureanhydrid und Diethylenglykol im Molverhältnis 1:2,67 mit einer OH-Zahl von 460, einer Säurezahl von 10 und einer Viskosität von 730 mPa.s bei 25°C.

Polyesterpolyol III, hergestellt durch Umsetzen von Phthalsäureanhydrid und Tetraethylenglykol im Molverhältnis 1:2,3 mit einer OH-Zahl von 190, einer Säurezahl von 7 und einer Viskosität von 1770 mPa.s bei 25°C.

Polyetherpolyol I, hergestellt aus einem Gemisch aus Saccharose und 1,2-Propandiol im Molverhältnis 1:5

Le A 22 686

und Propylenoxid mit einer OH-Zahl von 380 und einer Viskosität von 580 mPa.s bei 25°C.

Polyetherpolyol II, hergestellt aus 1,2-Propandiol und Propylenoxid mit einer OH-Zahl von 59 und einer Viskosität von 410 mPa.s bei 25°C.

Polyetherpolyol III, hergestellt aus 1,2-Propandiol und Propylenoxid mit einer OH-Zahl von 284 und einer Viskosität von 75 mPa.s bei 25°C.

Polyisocyanat I:
Polyisocyanatgemisch der Diphenylmethanreihe, hergestellt durch Phosgenierung eines Anilin/Formaldehyd-Kondensats, das neben höheren Homologen und einem geringen Anteil an 2,4'-Diisocyanatodiphenylmethan zu 60 % aus 4,4'-Diisocyanatodiphenylmethan besteht mit einem NCO-Gehalt von 31,5 % und einer Viskosität bei 25°C von 140 mPa.s.

Polyisocyanat II:
Urethangruppenaufweisendes Polyisocyanat, hergestellt durch Umsetzung von 2,4-Diisocyanatotoluol mit Trimethylolpropan, 75 %ige Lösung in Ethylacetat. Die Lösung weist einen NCO-Gehalt von 13 % und eine Viskosität bei 20°C von 1700 mPa.s auf.

Le A 22 686

## Beispiel 1

100 Gew.-Teile Polyesterpolyol I werden mit 10 Gew.-
Teilen einer 50 %igen Zeolith-Paste in Rizinusöl bei
80 bis 100°C unter Vakuum von 1 bis 2 mbar verrührt.
Nach Abkühlung auf Raumtemperatur gibt man 135 Gew.-
Teile Polyisocyanat I hinzu und verrührt 3 Minuten
lang. Die so erhaltene Gießharzmasse wird in 50°C heiße,
mit Trennmittel versehene Metallformen zu Platten der
Dicke 2 mm und 10 mm vergossen und 16 Stunden bei 60°C
und anschließend 24 Stunden bei 90°C gehärtet. Nach dem
Abkühlen werden Prüfstäbe und Prüfkörper herausgeschnitten, an denen folgende Eigenschaften ermittelt
werden:

| | | |
|---|---|---|
| Zugfestigkeit | 88 N/mm$^2$ | (DIN 53 455) |
| E-Modul | 3980 N/mm$^2$ | (DIN 53 457) |
| Biegefestigkeit | 155 N/mm$^2$ | (DIN 53 452) |
| Schlagzähigkeit | 40 kJ/m$^2$ | (DIN 53 453) |
| Wärmeformbeständigkeit | 85°C | (DIN 53 458) |

Die Festigkeitswerte liegen wesentlich höher als die
für Polyurethan-Gießharzformstoffe geforderten Werte
(DIN 16 946; Kunststoff-Handbuch Band 7, Polyurethane,
1983, Seite 410, Carl Hanser Verlag; Bayer-Kunststoffe 3. Ausgabe 1963 Seite 142).

## Beispiel 2

100 Gew.-Teile Polyesterpolyol II werden mit 1,5 Gew.-
Teilen Monofluortrichlormethan, 1 Gew.-Teil Schaum-

Le A 22 686

stabilisator auf Polysiloxanbasis und 2 Gew.-Teilen
Dimethylbenzylamin vermischt und anschließend mit
110 Gew.-Teilen Polyisocyanat I intensiv verrührt.
Die Mischung wird in eine oben offene Form gegossen.
Es bildet sich nach wenigen Sekunden ein frei getriebener Hartschaumblock. Dieser wird nach dem Erkalten zu Würfeln mit der Kantenlänge von 5 cm aufgeschnitten. Der Schaum weist ein spezifisches Gewicht
von 0,12 g/cm$^3$ und eine Druckfestigkeit von 2,4 N/mm$^2$
auf (DIN 53 421). Die Druckfestigkeit ist doppelt so
hoch wie bei Hartschäumen des Standes der Technik
(Bayer Kunststoffe 3. Ausgabe, 1963, Seite 118).

Beispiel 3

Es wird wie in Beispiel 1 verfahren mit dem Unterschied,
daß der Gießharzmasse zusätzlich 235 Gew.-Teile Quarzmehl und 1 Gew.-Teil Eisenoxidbraun vor dem Vergießen
zugefügt werden. Die Gießharzmasse wird in eine 80°C
heiße Metallform eines 10 kV-Stützisolators mit einem
Strunkdurchmesser von 5 cm und einer Höhe von 13 cm
gegossen. An der oberen und unteren Seite der Isolatorform sind Messingarmaturen angebracht, die eingegossen werden. Die Härtung geschieht 5 Stunden bei
80°C und anschließend 24 Stunden bei 120°C.

Der so erhaltene Stützisolator zeichnet sich durch
hohen Widerstand gegen Verformungskräfte bei Raumtemperatur und bei höheren Temperaturen aus. Er hält
elektrische Spannungen bis 80 kV ohne Überschlag
oder Durchschlag aus.

Le A 22 686

Beispiel 4

100 Gew.-Teile Polyesterpolyol III werden mit 10 Gew.-Teilen der in Beispiel 1 benutzten Zeolith-Paste und 50 Gew.-Teilen Polyisocyanat I vermischt und in eine Metallform für Dichtungsringe gegossen. Nach dem Aushärten erhält man gummiartige Dichtungsringe, die eine Zugfestigkeit von 15 $N/mm^2$ und eine Dehnung von 240 % aufweisen (DIN 53 455). Setzt man dem Gemisch vor dem Gießen 150 Gew.-Teile Quarzmehl hinzu, so verändern sich überraschenderweise Zugfestigkeit und Dehnung praktisch nicht, während die Härte deutlich zunimmt.

Beispiel 5

100 Gew.-Teile Polyesterpolyol I werden mit 312 Gew.-Teilen Polyisocyanat I vermischt. Die Mischung, auf verschiedene Untergründe wie Holz, Metalle, Kunststoffe aufgebracht, reagiert zu harten, abriebfesten und chemikalienbeständigen Lacken bzw. Beschichtungen von guter Haftfestigkeit. Durch Einarbeiten von Pigmenten, Farbstoffen und gegebenenfalls anderen Zusatzstoffen in das Polyesterpolyol und/oder das Polyisocyanat und/oder das Gemisch aus beiden lassen sich die Eigenschaften der Beschichtungen variieren.

Beispiel 6

Polyesterpolyol I wird mit den Polyetherpolyolen I, II und III jeweils im Gewichtsverhältnis 1:1 gemischt. Alle

Le A 22 686

drei Gemische sind homogen. Polyesterpolyol I ist somit mit den Polyetherpolyolen verträglich und mischbar.

Der gleiche Versuch wird mit den Polyesterpolyolen II und III durchgeführt. Es zeigt sich in allen Fällen Verträglichkeit und Mischbarkeit.

Beispiel 7

20 g Polyesterpolyol II und 22 g Polyisocyanat I werden in eine Glasflasche gegeben, die anschließend verschlossen wird. Die Flasche wird auf einem Rollbock in langsame Rotation versetzt, so daß der Inhalt sich vermischen kann. Nach 3 Minuten ist der Inhalt der Flasche homogen.

Nimmt man anstelle von 20 g Polyesterpolyol II, 22 g Polyetherpolyol I, so ist unter sonst gleichen Bedingungen der Inhalt der Flasche erst nach 35 Minuten homogen.

Beispiel 8

Es wird ein Polyolgemisch hergestellt aus 100 Gew.-Teilen Polyesterpolyol II, 40 Gew.-Teilen Polyetherpolyol III und 1,2 Gew.-Teilen Wasser. Dieses Polyolgemisch wird in das eine Vorratsgefäß einer Zweikomponenten Misch- und Dosieranlage eingefüllt. In das zweite Vorratsgefäß wird das Polyisocyanat I ge-

Le A 22 686

geben. Die Anlage fördert die beiden Komponenten im
Volumenverhältnis 1:1 mittels Zahnradpumpen über ein
statisches Mischrohr in eine Injektionslanze. Aus letzterer
wird das Reaktionsgemisch über Bohrlöcher in 2 Parallelversuchen in lockeres Schiefergestein einerseits und in
lockere Kohle andererseits gepreßt. Nach der Injektion
werden die Bohrlöcher jeweils mit Stopfen verschlossen.

Nach 15 Minuten werden die anfangs lockeren Gesteins-
bzw. Kohleschichten mit einer Spitzhacke gewaltsam auseinandergebrochen. Man stellt fest, daß der Polyurethanschaum vom Bohrloch ausgehend mehrere Dezimeter weit
in die Klüften des Gesteins bzw. der Kohle eingedrungen
ist und durch Verfestigen und Verkleben ein fester Verbund entstanden ist. Die Klebkraft des Polyurethans
auf Kohle bzw. Gestein ist gut.

Le A 22 686

0143304

## Patentansprüche

1. Verfahren zur Herstellung von Polyurethanen durch Umsetzung von organischen Polyisocyanaten mit Polyesterpolyolen, gegebenenfalls in Gegenwart der in der Polyurethanchemie üblichen Hilfs- und Zusatzmittel, dadurch gekennzeichnet, daß man als Polyesterpolyole Estergruppen aufweisende Umsetzungsprodukte des Hydroxylzahlbereichs von 150 bis 710, des Säurezahlbereichs von 0 bis 20 und des Viskositätsbereichs bei 25°C von 100 bis 6000 mPa.s von Phthalsäure und/oder Phthalsäureanhydrid mit gegebenenfalls Ethergruppen aufweisenden Alkandiolen oder Alkandiolgemischen des Hydroxylzahlbereichs von 400 bis 1810 verwendet.

2. Verfahren gemäß Anspruch 1, dadurch gekennzeichnet, daß man als Polyesterpolyole Estergruppen aufweisende Umsetzungsprodukte von Phthalsäure und/oder Phthalsäureanhydrid mit technischen Ethylen- und/oder Polyethylenglykolen verwendet.

3. Verfahren gemäß Anspruch 1 und 2, dadurch gekennzeichnet, daß man als Polyesterpolyole solche des Hydroxylzahlbereichs von 180 bis 600 auf Basis von Alkandiolen oder Alkandiolgemischen des Hydroxylzahlbereichs von 600 bis 1810 verwendet.

Le A 22 686